# EUROPÄISCHE PATENTSCHRIFT

(11) **EP 1 927 153 B1**
(45) Veröffentlichungstag und Bekanntmachung des Hinweises auf die Patenterteilung: **02.12.2009**
(21) Anmeldenummer: 05797439.6
(22) Anmeldetag: 20.09.2005
(51) Int. Cl.: H01M 10/48

(54) **AKKUPACK SOWIE ELEKTROHANDWERKZEUGGERÄT**
BATTERY PACK AND HAND-HELD POWER TOOL
ACCUMULATEUR ET OUTIL ELECTRIQUE A MAIN

(43) Veröffentlichungstag der Anmeldung: 04.06.2008
(73) Patentinhaber: Metabowerke GmbH, 72622 Nürtingen (DE)
(72) Erfinder: STICKEL, Wolfgang, 72660 Beuren (DE); SCHMID, Olaf, 70178 Stuttgart (DE)
(74) Vertreter: Langöhrig, Angelika Beate
(86) Internationale Anmeldenummer: PCT/EP2005/010109
(87) Internationale Veröffentlichungsnummer: WO 2007/033690

(56) Entgegenhaltungen:
- EP-A- 0 709 910
- EP-A- 1 130 672
- DE-A1- 4 234 231

## Beschreibung

Die Erfindung betrifft einen Akkupack, insbesondere für ein Elektrohandwerkzeuggerät, mit einem Akkugehäuse sowie einer in dem Akkugehäuse angeordneten Elektronikeinheit.

Akkupacks werden vielfach in Elektrohandwerkzeugen eingesetzt zum Antrieb eines in dem Elektrohandwerkzeug angeordneten Elektromotors sowie hierüber eines Werkzeugs. Dabei ist der Akkupack in aller Regel lösbar mit dem Gehäuse der Maschine verrastbar.

Die Verwendung von elektrischen Handwerkzeugmaschinen im Akkubetrieb ist insbesondere deshalb erwünscht, da diese eine höhere Flexibilität beim Arbeiten und insbesondere eine Unabhängigkeit von einer vorhandenen Stromquelle ermöglichen und auch Außenarbeiten so vielerorts durchgeführt werden können. Beim Koppeln der Gehäuse der Maschine und des Akkupacks wird der Motor elektrisch an den Akkupack angekoppelt und darüber mit Strom versorgt wird. Zum Koppeln der beiden Gehäuse ist gewöhnlich das Akkugehäuse mit einer überstehenden Verrastvorrichtung versehen, die in eine komplementäre Einsteckbuchse des Gerätegehäuses eingeschoben und in dieser verrastet wird. Die elektrische Kontaktierung erfolgt hierbei zumeist im Bereich der Verrastungsvorrichtung und zugleich mit der mechanischen Fixierung.

Ein derartiges Elektrohandwerkzeuggerät ist beispielsweise aus der DE 42 34 231 A1 bekannt, die insbesondere die Vorsehung eines Temperaturfühlers zur Steuerung des Ladevorgangs offenbart.

In letzter Zeit bestehen nun zunehmend Bestrebungen, Lithiumionenakkus einzusetzen, die im Akkugehäuse eine Elektronik aufweisen.

Es ist nun des Weiteren aus dem Stand der Technik bekannt, eine Anzeigeeinrichtung vorzusehen, über die ein Ladezustand des Akkupacks dargestellt wird. Dies kann hierbei vorzugsweise optisch erfolgen.

Problematisch ist jedoch bei sämtlichen mechanischen und elektrischen Anschlüssen, dass der Akkupack gemeinsam mit dem Elektrohandwerkzeuggerät zum Teil erheblichen Schwingungen im Arbeitsbetrieb ausgesetzt ist.

Eine derartige Beanspruchung betrifft nicht nur die mechanischen Befestigungsteile, sondern auch die elektrische Kontaktierung.

Es ist daher Aufgabe der Erfindung, eine Ladezustandsanzeige an einem Akkupack bereitzustellen, die eine größtmögliche Flexibilität bei der Anordnung zulässt und zugleich in funktionstechnischer Hinsicht unproblematisch ist.

Die Erfindung löst diese Aufgabe durch einen Akkupack mit den Merkmalen des Anspruchs 1 sowie ein Elektrohandwerkzeuggerät mit den Merkmalen des Anspruchs 14. Bei einem solchen Akkupack weist die Elektronikeinheit ein oder mehrere Lichtquellen auf und in das Akkugehäuse ist ein erstes Lichtleitelement einsetzbar, das mit der mindestens einen Lichtquelle derart zusammenwirkt, dass das von der mindestens einen Lichtquelle abgestrahlte Licht in das erste Lichtleitelement einkoppelbar ist.

Durch die Verwendung von Lichtleitelementen kann hierbei vorgesehen sein, dass eine räumliche Trennung der Anordnung der Lichtquelle sowie der Lichtabstrahleinrichtung vorgesehen werden kann. Auf diese Weise ist insbesondere eine flexible Anordnung der Lichtquellen im Akkugehäuse beziehungsweise an der Elektronikeinheit möglich.

Darüber hinaus besteht der Vorteil, dass zwischen der Lichtquelle und dem ersten Lichtleitelement eine räumliche Trennung, insbesondere ein Spalt vorgesehen sein kann, so dass die Lichtquelle und das Lichtleitelement schwingungstechnisch voneinander entkoppelt sind und so der Verschleiß und die Störanfälligkeit deutlich herabgesetzt ist.

Nach einer ersten Ausgestaltung kann daher vorgesehen sein, dass die mindestens eine Lichtquelle berührungslos das Licht in das erste Lichtleitelement einkoppelt und vorzugsweise zwischen Lichtquelle und erstem Lichtleitelement ein Spalt vorgesehen ist. Auf diese Weise wird die mechanische Störanfälligkeit reduziert. Der Spalt soll aber auf der anderen Seite so gering sein, dass die Lichtverluste minimiert sind.

Darüber hinaus kann vorgesehen sein, dass das erste Lichtleitelement eine Aufnahme für ein Schalterbetätigungselement aufweist. Hierbei kann insbesondere vorgesehen sein, dass das Lichtleitelement aus einem vollständig lichtleitenden Kunststoff hergestellt ist, und in dem Lichtleitelement eine Aufnahme, insbesondere eine Aussparung für die Aufnahme eines Schalterbetätigungselementes, vorgesehen ist.

Das Schalterbetätigungselement kann erfindungsgemäß auch vorgesehen sein, wenn keine berührungslose Koppelung des ersten Lichtleitelements an die Lichtquelle vorgesehen ist. Auf diese Weise wird eine flexible Anordnung der Lichtquelle im Akkugehäuse im Verhältnis zur Lichtaustrittsfläche erreicht und so eine Platzersparnis beziehungsweise bessere Bauraumausnutzung. Durch die Koppelung zweier Funktionen in einem Bauteil, nämlich der Ladezustandsanzeige sowie der Aufnahme eines Schalterbetätigungselementes wird darüber hinaus die benötigte Teilzahl reduziert.

Des Weiteren kann vorgesehen sein, dass die Lichtquellen mit einem zweiten Lichtleitelement zusammenwirken, die das Licht in das erste Lichtleitelement einkoppeln. Dabei kann das zweite Lichtleitelement vorzugsweise an der Elektronikeinheit festgelegt sein. Durch eine derartige Gestaltung wird erreicht, dass die eine oder mehrere Lichtquellen auf der Elektronikeinheit beliebig angeordnet sein können. Das Licht kann so über ein zweites Lichtleitelement, das berührungslos oder unter Berührung mit der oder den Lichtquellen zusammenwirkt, zum ersten Lichtleitelement geleitet werden.

Zwischen den beiden Lichtleitelementen kann dann ein Spalt vorgesehen sein, um eine schwingungstechnische Entkopplung vorzusehen. Der Spalt kann hierbei geringstmöglich ausgebildet sein, in jedem Fall jedoch so, dass eine sichere Lichtübertragung gewährleistet bleibt. Auf diese Weise wird darüber hinaus erreicht, dass die beiden Lichtleitelemente selber verhältnismäßig kurz ausgestaltet sein können. Das zweite Lichtleitelement ist dabei der Platine, also im Wesentlichen dem Akkuinneren zugeordnet, und das erste Lichtleitelement dem Akkugehäuse, also dem Akkuäußeren, wobei diese zwei Bereiche, nämlich Äußeres mit der Verrastvorrichtung zum Elektrogerät sowie Akkuinneres mit den Akkuzellen und der Elektronik vorzugsweise schwingungstechnisch voneinander getrennt sind.

Dabei ist vorgesehen, dass das erste Lichtleitelement Lichtleitzonen umfasst, wobei mehrere Lichtquellen vorgesehen sind und jeder Lichtquelle eine Lichtleitzone in den Lichtleitelementen zugeordnet ist und die Lichtleitzonen optisch im wesentlichen voneinander separiert sind. Für das zweite Lichtleitelement kann dies ebenfalls bevorzugt vorgesehen sein. So kann insbesondere vorgesehen sein, dass längliche Lichtleitzonen sowohl im ersten als auch im zweiten Lichtleitelement vorgesehen sind, wobei je eine Lichtleitzone im ersten Lichtleitelement mit einer Zone im zweiten Lichtleitelement korrespondiert. Hierbei weisen die Lichtleitzonen an ihren Stirnflächen Grenzflächen auf, die einen Lichtaustritt ermöglichen. Das Licht kann dann von der Lichtaustrittsfläche eines Lichtleitelements über eine Lichteintrittsfläche des anderen Lichtleitelements in dieses gelangen. Die Zonen der Lichtleitelemente selbst sind so gegeneinander durch weitere Grenzflächen separiert, dass Licht, das in eine Lichtleitzone eintritt, in Längsrichtung der Lichtleitzone betrachtet, an der Stirnfläche am gegenüberliegenden Ende der Lichtleitzone wieder aus der Lichtleitzone austritt, jedoch keine Abstrahlung in den Bereich weiterer Lichtleitzonen, zum Beispiel über die Mantelfläche, erfolgt. So kann insbesondere vorgesehen sein, dass vier Lichtleitzonen vorgesehen sind, wobei jede Lichtleitzone einen Ladezustand von cirka 25% anzeigt. Sind daher alle vier Lichtaustrittsflächen, die mit einer Lichtleitzone korrespondieren, beleuchtet, so ist der Akku voll geladen. Werden lediglich zwei Lichtaustrittsflächen des ersten Lichtleitelementes, die durch zwei Lichtleitzonen gespeist werden, beleuchtet, so liegt lediglich eine 50%-ige Aufladung des Akkus vor und der Benutzer erhält so einen Hinweis darauf, wie viel Restarbeitszeit mit einem entsprechenden Akkugerät ihm noch verbleibt oder wie lange die erneute Aufladung noch dauert.

Die Gestaltung der Lichtleitzonen kann über die Grenzflächengestaltung zwischen den einzelnen Lichtleitzonen realisiert werden.

Darüber hinaus kann vorgesehen sein, dass die Elektronikeinheit einen Schalter umfasst, der mit dem Schalterbetätigungselement zusammenwirkt. Dabei kann vorgesehen sein, dass das Schalterbetätigungselement durch eine Feder vom Schalter weg belastet ist. Auf diese Weise wird ebenfalls erreicht, dass eine solche Trennung der beiden Bauteile, Schalter und Schalterbetätigungselement, voneinander vorgesehen ist, dass eine weitgehende schwingungstechnische Entkopplung, wie sie für die Bauteile im Inneren eines Akkupacks notwendig ist, gegeben ist.

Dabei kann insbesondere vorgesehen sein, dass als Lichtquelle LEDs eingesetzt werden. LEDs besitzen den Vorteil einer hohen Lebensdauer und einer geringen Verschleißanfälligkeit. Insbesondere können LEDs während einer Vielzahl von Schaltvorgängen eingesetzt werden. Darüber hinaus bieten LEDs den Vorteil, lediglich eine geringe thermische Belastung für die Lichtleitelemente darzustellen, so dass Lichtleitelemente aus Kunststoffmaterial eingesetzt werden können, ohne insbesondere Infrarot-Filter vorzusehen oder Glasfaserelemente vorzuschalten. Auf diese Weise können die Kosten für eine entsprechende Ladezustandsanzeige weiter verringert werden.

Dabei kann vorgesehen sein, dass das erste Lichtleitelement in dem Akkugehäuse formschlüssig gehalten ist, insbesondere hierin eingeclipst ist. Auf diese Weise kann einfach zu montieren und kostengünstig herzustellen eine Verbindung geschaffen werden. Alternativ sind auch andere Verbindungsarten, wie zum Beispiel Kleben, denkbar. Das erste Lichtleitelement sowie auch das zweite Lichtleitelement können hierbei als Spritzgussteil hergestellt werden, wobei das erste Lichtleitelement zugleich die Aufnahme für das Schalterbetätigungselement beinhaltet. Durch diese Doppelfunktionalität können weiter Kosten eingespart sowie die Montage vereinfacht werden. Die Lichtleitelemente können dabei sowohl transparent als auch farbig gestaltet sein. Insbesondere können die einzelnen Lichtleitzonen auch verschiedene Farben aufweisen, um die Signalwirkung zu erhöhen. Als Akkuzellen sind hierbei vorzugsweise Lithiumionenzellen vorgesehen.

Des Weiteren betrifft die Erfindung ein Elektrohandwerkzeuggerät, unter Verwendung eines Akkupacks der vorstehend beschriebenen Art sowie die Verwendung eines Akkupacks für ein Elektrohandwerkzeuggerät, wobei der Akkupack über sein Akkugehäuse mit einem Elektrohandwerkzeuggerät mechanisch verbunden werden kann, wobei zugleich mit der mechanischen Verbindung eine elektrische Kontaktierung hergestellt wird, die es ermöglicht, über den Akku ein Elektrohandwerkzeuggerät anzutreiben.

Weitere Vorteile und Merkmale der Erfindung ergeben sich aus den übrigen Anmeldungsunterlagen. Die Erfindung soll im Folgenden anhand einer Zeichnung näher erläutert werden. Dabei zeigen:
- Figur 1: eine Explosionsdarstellung eines Akkugehäuses sowie des Lichtleiters und der Elektronikeinheit;
- Figur 2: einen Ausschnitt aus einem Schnitt durch einen Akkupack.

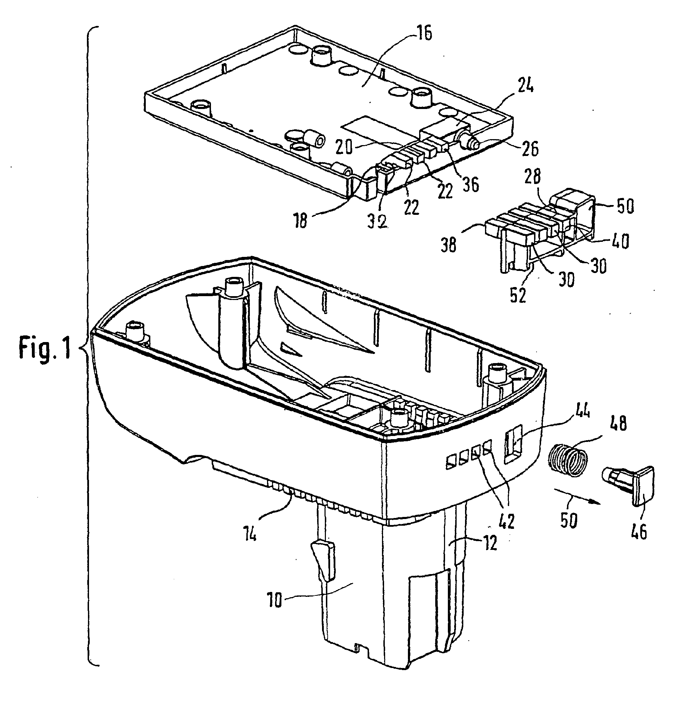

Figur 1 zeigt mit dem Bezugszeichen 10 ein Akkugehäuse, hinsichtlich seiner oberen Gehäuseschale.

Das Akkugehäuse 10 umfasst dabei zusätzlich noch eine Unterschale, die jedoch nicht gezeigt ist.

Das Gehäuse 10 beinhaltet ein Verbindungselement 12, das in eine entsprechende Ausnehmung (nicht dargestellt) eines Elektrohandwerkzeuggeräts eingeschoben werden kann und dort für die mechanische Verrastung, aber auch für die elektrische Kontaktierung des Akkus mit dem Elektrohandwerkzeuggerät sorgt.

Des Weiteren sind Lüftungsschlitze 14 vorgesehen, die im zusammengebauten Zustand eine Kühlung der Akkuzellen (nicht dargestellt) ermöglichen.

In die Gehäuseschale wird nun eine Elektronikeinheit 16 eingesetzt und dort verrastet. Die Elektronikeinheit 16 trägt hier als Lichtquellen 18 vier LEDs sowie ein zweites Lichtleitelement 20, wobei das zweite Lichtleitelement 20 vier Lichtleitzone 22 aufweist, und jede Lichtleitzone 22 mit einer Lichtquelle 18, korrespondiert. Die Lichtleitzonen sind darüber hinaus miteinander verbunden, sind jedoch lichttechnisch weitestgehend voneinander abgekoppelt. Darüber hinaus ist auf der Elektronikeinheit 16 ein Schalter 24 angebracht, der einen Taster 26 aufweist, der in Tasterlängsrichtung bewegbar ist.

Schließlich ist ein erstes Lichtleitelement 28 vorgesehen, das in das Akkugehäuse 10 eingesetzt wird und mit dem Akkugehäuse 10 formschlüssig verrastbar ist, wobei hierzu entweder das Akkugehäuse 10 oder das erste Lichtleitelement 28 Rastelemente aufweist, die im eingerasteten Zustand entsprechende Haltevorsprünge am anderen Bauteil hintergreifen.

Das erste und zweite Lichtleitelement 20, 28 ist dabei vollständig aus einem lichtleitenden Kunststoff hergestellt und das erste Lichtleitelement 28 weist ebenso wie das zweite Lichtleitelement 20 vier Lichtleitzonen 30 auf, wobei jede Lichtleitzone 30 eine längliche Form mit einem rechteckigen Querschnitt besitzt und jede Lichtleitzone 30 des ersten Lichtleitelements 28 mit einer Lichtleitzone 22 des zweiten Lichtleitelements 20 korrespondiert und in lichttechnischer Verbindung steht. Dabei existiert zwischen den Lichtleitelementen 20 und 28 im eingebauten Zustand ein gewisser Zwischenraum oder Spalt.

Wird nun Licht einer Lichtquelle 18 über eine Lichteinkoppelfläche 32 in eine Lichtleitzone 22 des zweiten Lichtleitelementes 20 über eine Stirnfläche eingekoppelt, so erfolgt eine möglichst weitgehende Reflektion der Strahlung an den Mantelflächen der Lichtleitzone 22. An der Stirnfläche 36 der Lichtleitzone 22, die der Eintrittsstirnfläche gegenüberliegt, tritt die Strahlung dann möglichst verlustfrei wieder aus. Die Strahlung wird, nachdem sie aus der Lichtleitzone 22 des zweiten Lichtleitelements 20 ausgetreten ist, in die jeweils zugehörige Lichteinkoppelfläche 38 einer Lichtleitzone 30 des ersten Lichtleitelementes 28 eingekoppelt und auch hier in Längsrichtung der Lichtleitzonen 30 weitergeleitet, wobei auch hier eine möglichst geringe Abstrahlung über die Mantel-Wandflächen der Lichtleitzonen 30 erfolgt. Insbesondere ist es unerwünscht, wenn Lichtstrahlung einer Lichtquelle 18 eine weitere Lichtleitzone 30 des Lichtleitelementes 28 als die Vorgesehene ausleuchtet.

Die Strahlung verlässt dann nach Durchqueren der entsprechenden Lichtleitzone 30 des ersten Lichtleitelements 28 die jeweilige Lichtleitzone 30 über eine als Lichtauskoppelfläche 40 dienende Stirnfläche, wobei die Lichtauskoppelfläche 40 im Bereich einer Öffnung 42 im Akkugehäuse 10 angeordnet ist. Dabei kann vorgesehen sein, dass das Lichtleitelement 28 mit seinen Lichtleitzonen 30 nicht nach außen über das Akkugehäuse 10 hinausragt. Im Akkugehäuse 10 sind dabei vier Ausnehmungen 42 entsprechend der Anzahl der Lichtleitzonen 30 vorgesehen. Darüber hinaus besitzt das Gehäuse 10 eine weitere Ausnehmung 44 zur Aufnahme eines Schalterbetätigungselementes 46, das federnd gelagert ist über die Feder 48, die das Schalterbetätigungselement 46 in Pfeilrichtung 50 vorbelastet.

Zur Festlegung des Schalterbetätigungselementes 46 ist nun vorgesehen, dass im ersten Lichtleitelement 28 eine Aufnahme 50 für das Schalterbetätigungselement 46 vorgesehen ist, wobei die Aufnahme 50 über Verbindungsrippen 52 des Lichtleitelements 28 mit den Lichtleitzonen 30 verbunden ist. Diese Verbindung stellt jedoch keine optisch Verbindung dar. Auf diese Weise kann die insgesamte Teileanzahl reduziert werden und so die Kosten, aber auch die Montage, vereinfacht werden. Insbesondere müssen weniger Passgenauigkeiten und Toleranzen beachtet werden.

Das Schalterbetätigungselement 46 wirkt dabei mit dem Schalter 24, der auf der Elektronikeinheit 16 angeordnet ist, zusammen. Das Schalterbetätigungselement 46 wird mit dem Lichtleitelement 28 verrastet, das wiederum im Gehäuse 10 formschlüssig festgelegt ist.

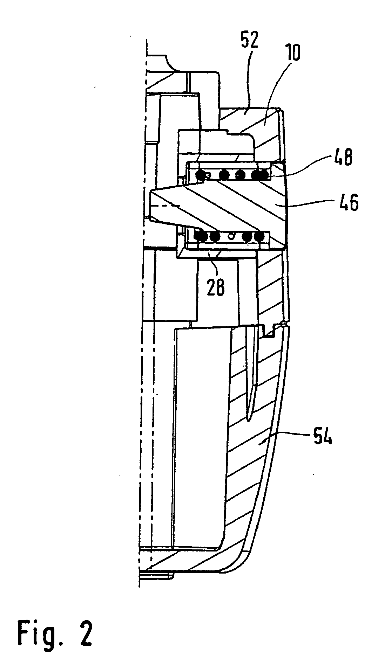

Figur 2 zeigt nun eine Schnittansicht, wobei hier das Gehäuse 10 hinsichtlich seiner oberen Gehäuseschale 52 und seiner unteren Gehäuseschale 54 dargestellt ist. In der oberen Gehäuseschale 52 ist das Schalterbetätigungselement 46 festgelegt und wird über die Feder 48 in Richtung seiner Längsachse aus dem Gehäuse heraus vorbelastet.

Die Aufnahme und Festlegung des Schalterbetätigungselements 46 erfolgt dabei in dem ersten Lichtleitelement 28. Die Lichtleitzonen 30 des ersten Lichtleitelements 28 sind in Figur 2 nicht dargestellt. In die Gehäusehälfte 54 werden dann die einzelnen Akkuzellen aufgenommen, die letztendlich zum Antrieb eines Elektrohandwerkzeugs dienen, wobei die Akkuzellen selbst mit der Elektronikeinheit 16 elektrisch verbunden sind. Bei den hierbei verwendeten Akkuzellen, die in die Gehäusehälfte 54 aufgenommen sind, handelt es sich um Lithiumionenzellen.

Auf die vorstehend beschriebene Weise kann ein Akkupack bereitgestellt werden sowie ein Elektrohandwerkgerät, bei dem die Herstellungskosten reduziert sind und darüber hinaus die Montage aufgrund von Teilereduktion vereinfacht ist. Weiterhin ist zwischen dem ersten Lichtleitelement 28 hinsichtlich seiner Lichtleitzonen 30 und deren Lichteinkoppelfläche 38 und dem zweiten Lichtleitelement 18 hinsichtlich seiner Lichtleitzonen 22 und deren Lichtauskoppelflächen 36 ein geringer Spalt vorgesehen, so dass hier Erschütterungen aufgrund der Bewegung eines Elektrohandwerkzeugs nicht von dem Maschinengehäuse auf das Akkugehäuse und von dort auf die Elektronik übertragen werden.

Erfindungsgemäß kann so die Verschleißanfälligkeit deutlich reduziert werden. Eine weitere schwingungstechnische Entkopplung erfolgt mittels der Feder 48 zwischen Schalterbetätigungselement 46 und Schalter 24.

## Patentansprüche

1. Akkupack, insbesondere für ein Elektrohandwerkzeuggerät mit einem Akkugehäuse (10) sowie einer in dem Akkugehäuse (10) angeordneten Elektronikeinheit (16), wobei die Elektronikeinheit (16) eine oder mehrere Lichtquellen (18) aufweist und in das Akkugehäuse (10) ein erstes Lichtleitelement (28) einsetzbar ist, das mit der mindestens einen Lichtquelle (18) zur Bildung einer Ladezustandsanzeige derart zusammenwirkt, dass das von der mindestens einen Lichtquelle (18) abgestrahlte Licht in das erste Lichtleitelement (28) einkoppelbar ist, **dadurch gekennzeichnet, dass** das erste Lichtleitelement (28) Lichtleitzonen (30) umfasst, wobei mehrere Lichtquellen vorgesehen sind und jeder Lichtquelle (18) eine Lichtleitzone (30) in dem Lichtleitelement (28) zugeordnet ist und die Lichtleitzonen (30) eines Lichtleitelements (28) optisch voneinander separiert sind.

2. Akkupack nach Anspruch 1, **dadurch gekennzeichnet, dass** die mindestens eine Lichtquelle (18) berührungslos das Licht in das erste Lichtleitelement (28) einkoppelt

3. Akkupack nach Anspruch 2, **dadurch gekennzeichnet, dass** zwischen Lichtquelle (18) und erstem Lichtleitelement (28) ein Spalt vorgesehen ist.

4. Akkupack nach einem der Ansprüche 1 bis 3, **dadurch gekennzeichnet, dass** das erste Lichtleitelement (28) eine Aufnahme (50) für ein Schalterbetätigungselement (46) aufweist.

5. Akkupack nach einem der vorangehenden Ansprüche, **dadurch gekennzeichnet, dass** die Lichtquellen (18) mit einem zweiten Lichtleitelement (20) zusammenwirken, über das das Licht in das erste Lichtleitelement (28) einkoppelbar ist, wobei das zweite Lichtleitelement (20) an der Elektronikeinheit (16) festgelegt ist.

6. Akkupack nach Anspruch 5, **dadurch gekennzeichnet**, **dadurch gekennzeichnet, dass** das zweite Lichtleitelement (20) Lichtleitzonen (22) umfasst, wobei jeder Lichtquelle (18) eine Lichtleitzone (22) in dem Lichtleitelement (20)zugeordnet ist und die Lichtleitzonen (22) eines Lichtleitelements (20) optisch voneinander separiert sind.

7. Akkupack nach einem der vorangehenden Ansprüche, **dadurch gekennzeichnet, dass** die Elektronikeinheit (16) einen Schalter (24) umfasst, der mit dem Schalterbetätigungselement (46) zusammenwirkt.

8. Akkupack nach Anspruch 7, **dadurch gekennzeichnet, dass** das Schalterbetätigungselement (46) durch eine Feder (48) von dem Schalter (24) im unbetätigten Zustand wegbelastet ist.

9. Akkupack nach einem der vorangehenden Ansprüche, **dadurch gekennzeichnet, dass** die mindestens eine Lichtquelle (18) eine LED ist.

10. Akkupack nach einem der vorangehenden Ansprüche, **dadurch gekennzeichnet, dass** die Lichtleitelemente (20, 28) aus Kunststoff bestehen.

11. Akkupack nach einem der vorangehenden Ansprüche, **dadurch gekennzeichnet, dass** das erste Lichtleitelement (28) in dem Akkugehäuse (10) formschlüssig gehalten ist.

12. Akkupack nach Anspruch 11, **dadurch gekennzeichnet, dass** das erste Lichtleitelement (28) in das Akkugehäuse (10) eingeclipst ist.

13. Akkupack nach einem der vorhergehenden Ansprüche, **dadurch gekennzeichnet, dass** in dem Akkugehäuse (10) Akkuzellen angeordnet sind, die mit der Elektronikeinheit (16) koppelbar sind, wobei die Akkuzellen Lithiumionenzellen sind.

14. Elektrohandwerkzeuggerät mit einem Akkupack nach einem der vorhergehenden Ansprüche, wobei der Akkupack mechanisch und elektrisch mit dem Elektrohandwerkzeuggerät verbindbar ist zum Antrieb eines Werkzeugs über einen im Elektrohandwerkzeuggerät vorgesehenen Elektromotor.

## Claims

1. Battery pack, in particular for an electrical hand tool device with a battery housing (10) and an electronic unit (16) arranged in the battery housing (10), whereby the electronic unit (16) has one or more light sources (18) and, in the battery housing (10), a first light-guiding element (28) can be inserted that interacts with the at least one light source (18) to form a charge level indicator in such a way that the light emanating from the at least one light source (18) can be coupled into the first light-guiding element (28), **characterised in that** the first light-guiding element (28) comprises light-guiding zones (30), whereby several light sources are provided and a light-guiding zone (30) in the light-guiding element (28) is assigned to each light source (18) and the light-guiding zones (30) of a light-guiding element (28) are separated optically from each other.

2. Battery pack in accordance with claim 1, **characterised in that** the at least one light source (18) is coupled into the light in the first light-guiding element (28) without touching it.

3. Battery pack in accordance with claim 2, **characterised in that** a gap is provided between light source (18) and a first light-guiding element (28).

4. Battery pack in accordance with claims 1 to 3, **characterised in that** the first light-guiding element (28) has a recess (50) for a switch actuating element (46).

5. Battery pack in accordance with one of the preceding claims, **characterised in that** the light sources (18) interact with a second light-guiding element (20), by means of which the light can be coupled into the first light-guiding element (28), whereby the second light-guiding element (20) is located on the electronic unit (16).

6. Battery pack in accordance with claim 5, **characterised in that** the second light-guiding element (20) comprises light-guiding zones (22), whereby a light-guiding zone (22) in the light-guiding element (20) is assigned to each light source (18) and the light-guiding zones (22) of a light-guiding element (20) are separated optically from each other.

7. Battery pack in accordance with one of the preceding claims, **characterised in that** the electronic unit (16) comprises a switch (24) which interacts with the switch actuating element (46).

8. Battery pack in accordance with claim 7, **characterised in that** the switch actuating element (46) is directionally loaded in the disengaged condition by a spring (48) in the switch (24).

9. Battery pack in accordance with one of the preceding claims, **characterised in that** the at least one light source (18) is an LED.

10. Battery pack in accordance with one of the preceding claims, **characterised in that** the light-guiding elements (20, 28) are made out of plastic.

11. Battery pack in accordance with one of the preceding claims, **characterised in that** the first light-guiding element (28) is retained in the battery housing (10) by a positive fit.

12. Battery pack in accordance with claim 11, **characterised in that** the first light-guiding element (28) is clipped into the battery housing (10).

13. Battery pack in accordance with one of the preceding claims, **characterised in that** batteries are arranged in the battery housing (10), whereby said batteries can be coupled to the electronic unit (16) and the batteries are lithium ion cells.

14. Electrical hand tool device with a battery pack in accordance with one of the preceding claims, whereby the battery pack can be connected mechanically and electrically to the electrical hand tool device to drive a tool by means of an electric motor provided in the electrical hand tool device.

## Revendications

1. Accumulateur, en particulier pour un outil électrique portatif, comportant un boîtier (10), ainsi qu'une unité électronique (16) disposée dans ledit boîtier (10), ladite unité électronique (16) comportant une ou plusieurs sources lumineuses (18) et un premier conducteur optique (28) pouvant être inséré dans le boîtier (1) et coopérant avec ladite au moins une source lumineuse (18) pour former un témoin d'état de charge, de telle sorte que la lumière émise par ladite au moins une source lumineuse (18) peut être injectée dans le premier conducteur optique (28), **caractérisé en ce que** le premier conducteur optique (28) comporte des zones de guidage de lumière (30), sachant qu'il est prévu plusieurs sources lumineuses et qu'à chaque source lumineuse (18) est associée une zone de guidage de lumière (30) dans le conducteur optique (28), et lesdites zones de guidage de lumière (30) d'un conducteur optique (28) sont séparées optiquement les unes des autres.

2. Accumulateur selon la revendication 1, **caractérisé en ce que** ladite au moins une source lumineuse (18) injecte sans contact la lumière dans le premier conducteur optique (28).

3. Accumulateur selon la revendication 2, **caractérisé en ce qu'**un interstice est prévu entre la source lumineuse (18) et le premier conducteur optique (28).

4. Accumulateur selon l'une quelconque des revendications 1 à 3, **caractérisé en ce que** le premier conducteur optique (28) comporte un logement (50) pour un élément de commande de commutateur (46).

5. Accumulateur selon l'une quelconque des revendications précédentes, **caractérisé en ce que** les sources lumineuses (18) coopèrent avec un deuxième conducteur optique (20), par lequel la lumière peut être injectée dans le premier conducteur optique (28), ledit deuxième conducteur optique (20) étant fixé sur l'unité électronique (16).

6. Accumulateur selon la revendication 5, **caractérisé en ce que** le deuxième conducteur optique (20) comporte des zones de guidage de lumière (22), sachant qu'à chaque source lumineuse (18) est associée une zone de guidage de lumière (22) dans le conducteur optique (20), et lesdites zones de guidage de lumière (22) d'un conducteur optique (20) sont séparées optiquement les unes des autres.

7. Accumulateur selon l'une quelconque des revendications précédentes, **caractérisé en ce que** l'unité électronique (16) comporte un commutateur (24), qui coopère avec l'élément de commande de commutateur (46).

8. Accumulateur selon la revendication 7, **caractérisé en ce que** l'élément de commande de commutateur (46) est sollicité par un ressort (48) pour s'écarter du commutateur (24) à l'état inactif.

9. Accumulateur selon l'une quelconque des revendications précédentes, **caractérisé en ce que** ladite au moins une source lumineuse (18) est une diode électroluminescente.

10. Accumulateur selon l'une quelconque des revendications précédentes, **caractérisé en ce que** les conducteurs optiques (20, 28)) sont réalisés en matière plastique.

11. Accumulateur selon l'une quelconque des revendications précédentes, **caractérisé en ce que** le premier conducteur optique (28) est maintenu par emboîtement dans le boîtier (10) de l'accumulateur.

12. Accumulateur selon la revendication 11, **caractérisé en ce que** le premier conducteur optique (28) est clipsé dans le boîtier (10) de l'accumulateur.

13. Accumulateur selon l'une quelconque des revendications précédentes, **caractérisé en ce que** dans le boîtier (10) sont disposées des piles qui peuvent être couplées à l'unité électronique (16), lesdites piles étant des piles aux ions de lithium.

14. Outil électrique portatif comportant un accumulateur selon l'une quelconque des revendications précédentes, ledit accumulateur étant apte à être relié mécaniquement et électriquement avec l'outil électrique portatif en vue de l'entraînement d'un outil par l'intermédiaire d'un moteur électrique prévu dans l'outil électrique portatif.
